# FASCICULE DE BREVET EUROPEEN

(11) **EP 3 216 170 B1**
(45) Date de publication et mention de la délivrance du brevet: **22.07.2020**
(21) Numéro de dépôt: 15788442.0
(22) Date de dépôt: 04.11.2015
(51) Int. Cl.: H04L 12/24, H04L 12/703, H04L 12/939, H04L 12/707

(54) **PROCÉDÉ DE RECONFIGURATION RAPIDE D'UN ROUTAGE SUR PANNE D'UN PORT D'UN COMMUTATEUR**
VERFAHREN ZUR SCHNELLEN REKONFIGURATION VON ROUTING IM FALL EINES DEFEKTS BEI EINEM SCHALTERPORT
METHOD FOR QUICK RECONFIGURATION OF ROUTING IN THE EVENT OF A FAULT IN A PORT OF A SWITCH

(30) Priorité: 05.11.2014 FR 1460695; 18.11.2014 FR 1461142
(43) Date de publication de la demande: 13.09.2017
(73) Titulaire: Bull SAS, 78340 Les Clayes-sous-Bois (FR)
(72) Inventeur: PEROTIN, Mathieu, 75014 Paris (FR)
(74) Mandataire: Cabinet Camus Lebkiri
(86) Numéro de dépôt international: PCT/EP2015/075709
(87) Numéro de publication internationale: WO 2016/071402

(56) Documents cités:
- US-A1- 2003 021 223
- US-A1- 2008 232 347
- US-B1- 7 120 834

## Description

### DOMAINE TECHNIQUE DE L'INVENTION

L'invention se rapporte à un procédé de reconfiguration rapide d'un routage sur panne d'un port d'un commutateur. Plus spécifiquement l'invention se rapporte à un procédé de reconfiguration rapide d'un routage sur panne d'un port d'un commutateur d'un réseau de nœuds de calcul.

On entendra par «panne d'un port» dans le présent document le changement d'état d'un port. Un tel changement d'état se produit, par exemple, pour une panne du port, mais aussi pour une panne d'un élément matériel ou logique connecté au port, comme un câble ou même un lien logique.

On entendra par réseau de nœuds de calcul, dans le cadre du présent document tout réseau de machines, une machine étant au moins parmi : un ordinateur, un serveur, une lame.... Sont en particulier visés les grappes des serveurs, c'est-à-dire les supercalculateurs ou encore les calculateurs hautes performances. Est encore visé le domaine du calcul haute performance désigné comme HPC.

### ETAT DE LA TECHNIQUE ANTERIEURE

La taille des supercalculateurs croissant, les topologies des réseaux correspondant se complexifient en se densifiant. La fréquence des pannes touchant les réseaux étant une fonction du nombre d'équipements, cette fréquence augmente. Dans le même temps, les équipements de calcul se densifient de telle sorte que le nombre de cœurs par processeur et le nombre de processeurs par nœud de calcul augmentent. Dès lors, l'impact d'une panne, même classique, voire attendue, comme une défaillance de câble d'interconnexion est susceptible de porter sur un très grand nombre d'applications et d'induire un échec de leur exécution. Ces occurrences, critiques, sont à éviter, et pourtant, elles sont appelées à augmenter par la conjonction des deux facteurs exposés : augmentation des tailles de réseaux d'interconnexion et densification des moyens de calcul.

Il est connu du document US7 120 834 B1 un commutateur et son processus en cas de défaillance d'un port en transférant des trames vers un ou plusieurs autres ports de sauvegardes du commutateur.

Le problème technique repose sur une problématique temporelle. Il est porté par un problème d'optimisation qui vise à minimiser le temps de réaction de la détection de la panne à son contournement. Passé un délai de réaction défini par des critères applicatifs, un programme parallèle échouera. En revanche, si une solution de contournement est trouvée et déployée avant l'expiration de ce délai, la panne sera invisible pour les applications touchées. Le levier d'action agit sur le routage, c'est à dire le calcul et l'utilisation des trajets qu'un message doit suivre sur un réseau pour atteindre sa destination. Une opération de re-calcul doit être lancée pour prendre en compte la panne et la contourner, afin d'une part de laisser le temps aux équipes de support d'intervenir et d'autre part de minimiser l'impact perturbateur de la défaillance.

L'augmentation de la taille des topologies réseau et du nombre d'équipement susceptibles d'émettre des messages pousse les algorithmes de routage existants dans leurs derniers retranchements. Leur complexité fait exploser leur temps de calcul et fait passer leur temps de réaction au-delà du délai de réaction allouable.

Les supercalculateurs actuels gèrent leur routage, et donc les opérations de re-routage, de façon centralisée : un unique serveur a la charge de la récupération de l'état de la topologie ainsi que les décisions de routage conséquentes. C'est par exemple le cas d'« OpenSM », démon utilisé par les réseaux Infiniband. Cette approche centralisée ne passe pas à l'échelle de l'exa-flops, ni même celle de la cinquantaine de pétaflops. C'était aussi le cas avec le composant logiciel MCP des réseaux Myrinet. Aucunes de ces solutions :
- ne passe à l'échelle ;
- n'offre la possibilité d'offrir un re-routage rapide.

Il est en effet nécessaire de centraliser la topologie sur un unique point du réseau, puis d'effectuer un calcul global avant de redéployer les tables de routage mises à jour.

### EXPOSE DE L'INVENTION

La présente invention offre une solution pour permettre de réduire drastiquement les temps de reprise sur panne, passant en dessous du seuil de détection des applications de calcul. Les types de pannes couverts vont de la perte d'un lien à la perte d'un routeur. L'efficacité de la correction dépend de la topologie haute-performance et de la position de la panne.

L'invention met en œuvre, une distribution au plus proche de l'opération de re-routage ce qui permet un passage à l'échelle et l'obtention d'une solution fonctionnant aussi bien aux échelles existantes qu'aux échelles à venir. Pour autant, cette distribution, si elle entraîne la confrontation attendue aux problématiques inhérentes au domaine, doit aussi idéalement se faire au plus proche de la défaillance, c'est à dire au sein du routeur. Cette mise en œuvre au plus proche de la panne permet la réduction du temps détection-action à son minimum mais n'offre que des ressources très limitées, réduisant le champ d'action des algorithmes. Elle permet cependant de fournir aux applications une continuité de routage qui évite les mises en défaut des dites applications.

L'invention est un procédé exécutable directement sur les cartes de contrôle associées à chaque commutateur d'un réseau. Ces cartes sont des ordinateurs embarqués de taille modeste, qui ont notamment à leur charge la communication avec un réseau de management, la gestion des erreurs ainsi que les tables de routage.

Sans aucune autre information que celles accessibles localement, c'est-à-dire la disponibilité des ports, le procédé selon l'invention est capable de re-calculer un routage, en remplaçant les routes qui utilisaient un port défaillant par une nouvelle route fonctionnelle. Ces informations locales sont partielles, mais elles suffisent pour mettre en place un re-routage fonctionnel, dans la plupart des cas.

Dans ce dessein, un aspect de l'invention se rapporte à un procédé de reconfiguration rapide d'un routage sur panne d'un port d'un commutateur comportant une pluralité de ports suivant la revendication 1.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles:
- il comporte également les étapes suivantes :
   - Réception d'un message de mise à jour de table de routage,
   - Utilisation de données du message de mise à jour de table de routage pour mettre à jour la mémoire de travail et la mémoire de persistance, ces mises à jour étant conforme aux données du message de mise à jour.
- l'identifiant de port fonctionnel utilisé pour la mise à jour est sélectionnée dans un ensemble formé par des identifiants de ports fonctionnels de la pluralité de ports
- l'identifiant de port fonctionnel utilisé pour la mise à jour est sélectionnée de manière aléatoire.
- l'identifiant de port fonctionnel utilisé pour la mise à jour est sélectionnée en fonction d'un compteur correspondant à un nombre de mises à jour effectuées.
- l'identifiant de port fonctionnel utilisé pour la mise à jour est sélectionnée en fonction d'un rang prédéterminé dans une liste d'identifiants de ports.
- une liste de ports utilisée pour sélectionner l'identifiant de port fonctionnel est triée.
- le critère de tri est la charge des ports.

L'invention se rapporte également à un dispositif de stockage numérique comportant un fichier correspondant à des codes instructions mettant en œuvre le procédé selon l'une des revendications 1 à 7 lorsque ces codes d'instructions sont exécutés.

L'invention se rapporte également à un dispositif comprenant les moyens configurés pour mettre en œuvre le procédé selon l'une des revendications 1 à 7.

### BREVE DESCRIPTION DES FIGURES

D'autres caractéristiques et avantages de l'invention ressortiront à la lecture de la description qui suit, en référence aux figures annexées, qui illustrent :
- la figure 1, une vue d'un commutateur mettant en œuvre un procédé selon l'invention ;
- la figure 2, une illustration d'étapes du procédé selon l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

### DESCRIPTION DETAILLEE D'UN MODE DE REALISATION

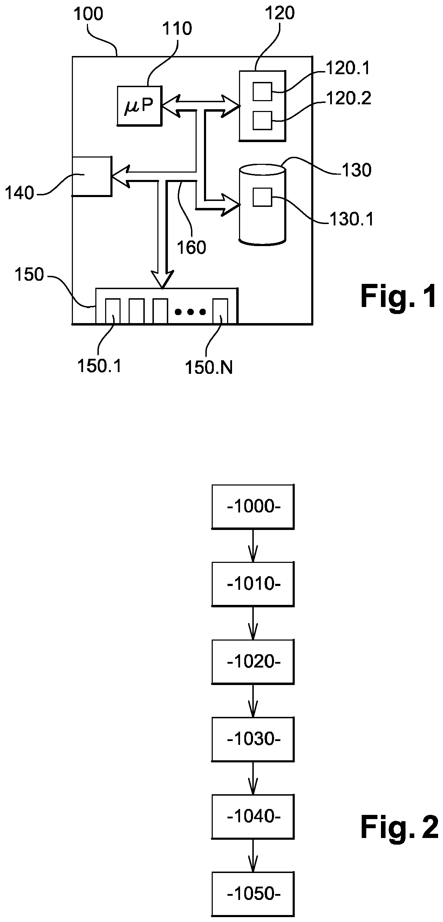

A la figure 1 est illustré un dispositif sur lequel l'invention peut être mise en œuvre. La figure 1 montre un commutateur 100 comportant :
- un microprocesseur 110 ;
- une mémoire 120 de travail, aussi appelée mémoire vive ou RAM ;
- une mémoire 130 de persistance, c'est-à-dire une mémoire capable de sauvegarder des données même en l'absence d'alimentation, typiquement on utilise une mémoire flash, plus rarement un disque dur SSD ou classique ;
- un port 140 de gestion, en général il s'agit d'un port Ethernet ;
- une pluralité 150 de ports 150.i d'exploitation, en général il s'agit de ports InfiniBand.

Le microprocesseur 110 du commutateur 100, la mémoire 120 de travail du commutateur 100, la mémoire 130 de persistance du commutateur 100, le port 140 de gestion du commutateur 100 et la pluralité 150 de ports d'exploitation du commutateur 100 sont interconnectés par au moins un bus 160.

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés.

La figure 1 montre que la mémoire 130 de persistance comporte au moins une zone 130.1 table de routage comportant une pluralité d'enregistrement de routage. Un enregistrement de routage est composé d'au moins deux champs :
- Un champ identifiant de destination,
- un champ identifiant de port.

Un commutateur reçoit des messages par un port et les réémet pas un autre port. Cet autre port est déterminé en croissant au moins une caractéristique d'un message avec les enregistrements de la table de routage. Un message est au moins caractérisé par une information de destinataire. Cette information de destinataire permet de trouver un enregistrement dans la table de routage. L'enregistrement trouvé permet de déterminer via quel port le message doit être réémis.

La figure 1 montre que la mémoire 120 de travail comporte plusieurs zones dont au moins :
- une zone 120.1 table de routage, il s'agit d'une copie de la table de routage de la mémoire de persistance, les accès à cette mémoire de travail sont rapides mais cette mémoire de travail n'est pas capable de sauvegarder des données sans alimentation, le microprocesseur charge donc les données depuis la mémoire de persistance dans la mémoire de travail, de même quand le processeur souhaite enregistrer une données dans la mémoire de persistance, il l'écrit d'abord dans la mémoire de travail ;
- une zone 120.2 de statuts des ports dans laquelle sont enregistrés des enregistrements de statut de port, un enregistrement de statut de port comportant au moins de deux champs :
   - Un premier champ identifiant de port,
   - Un deuxième champ statut de port, un statut étant choisi parmi la liste formée d'au moins : « opérationnel », « en panne ».

On note ici qu'un port peut être en panne pour diverses raisons :
- Défaut au niveau du port,
- Défaut au niveau d'un câble raccordé au port,
- Absence de câble,
- ... la liste n'est pas exhaustive.

La figure 2 montre une étape 1000 préliminaire dans laquelle une défaillance se produit au niveau d'un port 150.i de la pluralité 150 de ports. Une telle panne provoque, de manière connue, la mise en œuvre, par le commutateur 100 d'une étape de signalement 1010. La présente invention modifie cette étape de signalement pour y ajouter des instructions de branchement vers des étapes spécifiques à l'invention. Une défaillance, ou panne, peut être due au port lui-même, mais également à un câble en liaison avec le port, à un autre port en liaison avec le port, à une défaillance de lien, c'est-à-dire un problème de logiciel rendant le port inutilisable... la liste n'est pas exhaustive

Dans l'étape 1010 de signalement le commutateur 100 produit et émet un premier message de signalement via le port 140 de gestion. Le premier message de signalement est un message selon le protocole SNMP (Simple Network Management Protocole pour protocole simple de gestion de réseau), par exemple un message TRAP ou INFORM. La charge utile de ce premier message comporte au moins un identifiant du commutateur et un identifiant du port défaillant du commutateur. Dans l'étape 1010 de signalement le commutateur met également à jour la zone 120.2 de statuts de la mémoire de travail pour y écrire le statut « en panne » dans l'enregistrement correspondant au port défaillant.

De l'étape 1010 le commutateur passe alors à une étape 1020 de mise à jour des données de routage dans la mémoire de travail. Cette étape est dite autonome car elle n'utilise que les données locales c'est-à-dire enregistrées dans des mémoires du commutateur et surtout des données produites par le commutateur.

Dans l'étape 1020 de mise à jour des données de routage, le commutateur recherche dans la zone 120.1 de table de routage de la mémoire de travail du commutateur les enregistrements de routage comportant l'identifiant du port défaillant dans leur champ identifiant de destination.

Pour chacun des enregistrements trouvés le commutateur remplace la valeur de l'identifiant du port défaillant par une valeur d'un identifiant d'un port opérationnel. Cette mise à jour se fait donc dans la mémoire de travail du commutateur. Cette mise à jour ne sera pas propagée dans la mémoire de persistance du commutateur. Cela signifie que si le commutateur redémarre, cette mise à jour sera perdue. Il s'agit d'une mise à jour temporaire, mais rapidement effectuée.

Dans certains commutateurs, une table de routage existe également dans une mémoire d'un circuit spécialisé. Ce circuit spécialisé, dédié à la gestion du routage, est utilisé pour des raisons de performance. Ce circuit spécialisé comporte alors sa propre copie des données de routage. Pour un tel commutateur, dans l'étape 1020, on met également à jour les données de routage du circuit spécialisé. La mémoire d'un tel circuit spécialisé n'est pas persistante. Une telle mise à jour est donc temporaire.

La valeur d'un port opérationnel peut être sélectionnée de plusieurs façons. Un premier mode de sélection d'une valeur est de choisir la même valeur pour toutes les mises à jour. Cette valeur sélectionnée est alors, par exemple :
- La première valeur d'identifiant port opérationnelle trouvée dans la zone 120.2 de statuts des ports de la mémoire de travail du commutateur. Dans ce cas le commutateur parcourt séquentiellement les enregistrements de la zone 120.2 de statuts des ports de la mémoire de travail du commutateur et s'arrête dès qu'il en trouve un dont le champ statut vaut « opérationnel ». La valeur identifiant de l'enregistrement est alors utilisée pour toutes les mises à jour.
- La nième valeur d'identifiant port opérationnelle trouvée dans la zone 120.2 de statuts des ports de la mémoire de travail du commutateur. Dans ce cas le commutateur parcourt séquentiellement les enregistrements de la zone 120.2 de statuts des ports de la mémoire de travail du commutateur et s'arrête dès qu'il a compté N enregistrement dont le champ statut vaut « opérationnel ». La valeur identifiant de l'enregistrement sur lequel s'est arrête le comptage est alors utilisée pour toutes les mises à jour. La valeur de N est prédéterminée ou choisie de manière aléatoire par une fonction pseudo aléatoire mise en œuvre par le commutateur.

Un deuxième mode de sélection d'une valeur est de choisir une valeur dépendant de l'enregistrement mis à jour. Dans ce mode on compte les mises à jour au fur et à mesure de leur réalisation via un compteur, on sélectionne une valeur selon le premier mode de sélection en utilisant la nième valeur, N valant la valeur du compteur. La valeur d'identifiant de port change donc bien pour chaque nouvelle mise à jour.

Quel que soit le mode de sélection d'un port opérationnel on note que l'on peut restreindre la recherche à un sous-ensemble des ports opérationnels disponibles. Un tel sous-ensemble est prédéterminé, par exemple par paramétrage, et permet d'accélérer la sélection ou de s'assurer d'une plus grande pertinence du port sélectionné.

Une différence notable entre les premier et deuxième modes de sélection d'une valeur de mise à jour est que dans le deuxième mode la valeur pour la mise à jour est calculée pour chaque mise à jour. Les modes de sélection de d'une valeur de mise à jour ne sont pas les seuls possibles.

Dans une variante de l'invention on trie les données de la de zone 120.2 de statuts des ports avant de la parcourir, on obtient ainsi une liste triée que l'on peut parcourir selon au moins l'un des modes décrits. Un tri se fait par exemple selon l'identifiant de port, un autre tri se fait selon le statut du port, encore un autre tri se fait en fonction d'une information de charge du port. Une telle information de charge est obtenue en parcourant la zone 120.1 table de routage et en faisant une agrégation sur l'identifiant de port, ce qui permet d'obtenir, pour chaque identifiant de port, le nombre d'occurrences dans la zone120.1. Ce nombre d'occurrences est la charge du port. Dans une variante d'un tri par la charge du port on considère chaque modification de la zone 120.1 de table de routage pour recalculer, au moment de la modification, la charge du port concerné, ce qui modifie le tri pour les éventuelles modifications ultérieurs.

Ainsi si on considère une variante triée selon la charge et rand prédéterminé égal à un, on sélectionnera toujours le port le moins chargé.

Il est clair que dans les opérations décrites, on ignore les ports défaillants.

Dans une autre variante, cumulable avec les précédentes, on ne considère qu'un sous ensemble de ports pour la sélection de l'identifiant de port fonctionnel. On effectue donc une pré-sélection. En particulier cette pré-sélection permet d'exclure, par exemple, les ports descendants. Le fait qu'un port soit descendant est une caractéristique du port qui est enregistrée, par exemple, comme un champ type dans la zone 120.2 de statuts des ports. Ainsi pour chaque port on peut gérer des caractéristiques supplémentaires. La caractéristique type est renseignée par configuration au moment de la mise en place du commutateur 100.

Ainsi un ensemble de ports dans lequel est sélectionné un identifiant est, par exemples :
- l'ensemble de tous les ports fonctionnels
- un sous ensemble de l'ensemble de tous les ports fonctionnels selon un critère prédéterminé comme le type du port.

L'étape 1020 de mise à jour des données de routage dans la mémoire de travail est suivie d'une étape 1030 d'émission d'un deuxième message de signalement via le port 140 de gestion. Le deuxième message de signalement est un message selon le protocole SNMP, par exemple un message TRAP ou INFORM. La charge utile de ce deuxième message comporte au moins un identifiant du commutateur et une description des modifications apportées aux données de routage dans la mémoire de travail.

Le premier message de signalement et le deuxième message de signalement sont envoyés à un serveur de gestion non représenté. Le serveur de gestion utilise les charges utiles pour calculer de nouvelles informations de routage avant d'émettre ces nouvelles informations de routages vers le commutateur qui a émis les messages de signalement.

Sans l'invention le serveur de gestion ne dispose que d'un identifiant de port défaillant. Avec l'invention il sait en plus quels modifications ont été apportées par la correction rapide effectuée par le commutateur. Il peut donc prendre en compte ces modifications dans son calcul. Une telle prise en compte est :
- Une validation, c'est-à-dire la modification est bonne et donc il n'y a pas de raison de la transmettre à nouveau,
- Une correction, c'est-à-dire la correction rapide effectuée n'est pas optimale et il faut la corriger.

Une fois son calcul effectué, le serveur de gestion envoie un message de mise à jour des informations de routage vers le commutateur. Un tel message de mise à jour est une réponse aux messages de signalement. La production d'un tel message de mise à jour des informations de routage prend, avec ou sans l'invention, au moins une dizaine de secondes, mais ce temps dépasse généralement la minute pour les très grandes topologies c'est-à-dire les topologies de plus de 50000 nœuds de calcul.

Dans une étape 1040 de réception d'un message de mise à jour d'une table de routage le commutateur 100 reçoit le message produit par le serveur. Un tel message est usuel pour un commutateur. Le traitement d'un tel message consiste à utiliser les données du message pour mettre à jour les données de routage dans toutes les mémoires du commutateur utilisant ces données. Dans notre exemple, cela inclut la mémoire de travail et la mémoire de persistance. Après le traitement de ce message de mise à jour, si le commutateur redémarre, le commutateur défaillant sera correctement pris en compte. La correction a été persistée.

Dans le cas de la mise en œuvre on a décrit un commutateur gérant des données de routage via deux mémoires. L'invention reste valable pour un commutateur utilisant plus de mémoire. Par exemple il est possible que le microprocesseur 110 du commutateur 100 soit un circuit spécialisé comportant une mémoire dédiée ultra rapide dans laquelle il enregistre des informations de routage. Dans ce cas l'invention permet de mettre à jour rapidement la mémoire dédiée mais ni la mémoire de travail ni la mémoire de persistance. Il est aussi possible de ne mettre à jour que la mémoire dédié et la mémoire de travail. Le principe de l'invention est de ne mettre à jour que les mémoires impliqué dans les opérations de routage, c'est-à-dire les mémoires utilisées par le microprocesseur pour déterminer une route.

Ainsi avec l'invention, ces réparations partielles n'ont pas vocation à être optimales. Les modes présentés parviendront à faire parvenir le trafic parvenant des ports descendants mais ne peuvent pas agir en amont afin d'éviter que du trafic qui descendait par un port tombé continue à être acheminé. Dans tous les cas, une mise à jour plus complète va suivre, calculée par un module de routage du serveur de gestion.

Aussi, les modifications effectuées par une réparation rapide selon l'invention ne sont pas stockées en mémoire de persistance : elles sont temporaires.

Cette réparation rapide permet néanmoins de prévenir des défauts applicatifs au niveau de nœuds de calcul connectés au commutateur.

## Revendications

1. Procédé de reconfiguration rapide d'un routage sur panne d'un port d'un commutateur (100) comportant une pluralité de ports (150, 150.i, 150.1, 150.N), une mémoire de persistance (130) comportant au moins une zone (130.1) table de routage comportant une pluralité d'enregistrement de routage pour persister des données correspondant à une table de routage (130.1) et une mémoire de travail (120) comportant plusieurs zones dont au moins une zone (120.1) table de routage qui est une copie de la table de routage de la mémoire de persistance, pour travailler sur des données correspondant à une table de routage (120.1) **caractérisé en ce qu'**il comporte les étapes suivantes :
- Emission (1010) d'un premier message de signalement de panne qui comporte au moins un identifiant du commutateur et un identifiant du port défaillant du commutateur,
- Mise à jour (1020) autonome des données de routage uniquement dans la mémoire de travail en remplaçant un identifiant du port en panne (150.i) par un identifiant d'un port fonctionnel, l'identifiant du port fonctionnel étant sélectionné localement,
- Emission (1030) d'un deuxième message de signalement de la mise à jour de la table, comprenant une charge utile comportant au moins un identifiant du commutateur et une description des modifications apportées aux données de routage dans la mémoire de travail,
- Réception (1040) d'un message de mise à jour de table de routage,
- Utilisation (1050) de données du message de mise à jour de table de routage pour mettre à jour la mémoire de travail et la mémoire de persistance, ces mises à jour étant conforme aux données du message de mise à jour.

2. Procédé de reconfiguration rapide selon la revendication 1, **caractérisé en ce que** l'identifiant de port fonctionnel utilisé pour la mise à jour est sélectionnée dans un ensemble formé par des identifiants de ports fonctionnels de la pluralité de ports

3. Procédé de reconfiguration rapide selon l'une des revendications précédentes, **caractérisé en ce que** l'identifiant de port fonctionnel utilisé pour la mise à jour est sélectionnée de manière aléatoire.

4. Procédé de reconfiguration rapide selon l'une des revendications 1 à 3, **caractérisé en ce que** l'identifiant de port fonctionnel utilisé pour la mise à jour est sélectionnée en fonction d'un compteur correspondant à un nombre de mises à jour effectuées.

5. Procédé de reconfiguration rapide selon l'une des revendications 1 à 3, **caractérisé en ce que** l'identifiant de port fonctionnel utilisé pour la mise à jour est sélectionnée en fonction d'un rang prédéterminé dans une liste d'identifiants de ports.

6. Procédé de reconfiguration rapide selon l'une des revendications précédentes, **caractérisé en ce qu'**une liste de ports utilisée pour sélectionner l'identifiant de port fonctionnel est triée.

7. Procédé de reconfiguration rapide selon la revendication 6, **caractérisé en ce que** le critère de tri est la charge des ports.

8. Dispositif de stockage numérique comportant un fichier correspondant à des codes instructions mettant en œuvre le procédé selon l'une des revendications précédentes lorsque ces codes d'instruction sont exécutés.

9. Dispositif comprenant les moyens configurés pour mettre en œuvre le procédé selon l'une des revendications 1 à 7.

## Patentansprüche

1. Rasches Neukonfigurations-Verfahren eines Routings bei einer Panne eines Ports eines Schalters (100), umfassend eine Vielzahl von Ports (150, 150.i, 150.1, 150.N), eines Persistenzspeichers (130), umfassend wenigstens einen Bereich (130.1) einer Routingtabelle, umfassend eine Vielzahl von Weiterleitungs-Datensätzen zum Persistieren der einer Routingtabelle (130.1) entsprechenden Daten und einen Arbeitsspeicher (120), umfassend mehrere Bereiche, von denen wenigstens ein Bereich (120.1) einer Routingtabelle, die eine Kopie der Routingtabelle des Persistenzspeichers ist, zum Arbeiten mit den einer Routingtabelle (120.1) entsprechenden Daten, **dadurch gekennzeichnet, dass** es die folgenden Schritte umfasst:
- Ausgabe (1010) einer ersten Pannen-Meldungsnachricht, die wenigstens eine Kennung des Schalters und eine Kennung des ausgefallenen Ports des Schalters umfasst;
- Autonome Aktualisierung (1020) der Routingdaten ausschließlich in dem Arbeitsspeicher durch Ersetzen einer Kennung des defekten Ports (150.1) durch eine Kennung eines funktionalen Ports, wobei die Kennung des funktionalen Ports lokal ausgewählt wird;
- Ausgabe (1030) einer zweiten Meldungsnachricht über die Aktualisierung der Tabelle, umfassend eine Nutzlast, umfassend wenigstens eine Kennung des Schalters und eine Beschreibung der Änderungen, die an den Routingdaten im Arbeitsspeicher vorgenommen werden,
- Empfang (1040) einer Aktualisierungsmeldung der Routingtabelle,
- Verwendung (1050) der Daten der Aktualisierungsmeldung der Routingtabelle zum Aktualisieren des Arbeitsspeichers und des Persistenzspeichers, wobei diese Aktualisierungen mit den Daten der Aktualisierungsmeldung konform sind.

2. Rasches Neukonfigurations-Verfahren gemäß Anspruch 1, **dadurch gekennzeichnet, dass** die funktionale Portkennung, die für die Aktualisierung verwendet wird, aus einer Gruppe ausgewählt wird, die durch die funktionalen Portkennungen der Vielzahl von Ports gebildet wird.

3. Rasches Neukonfigurations-Verfahren gemäß einem der voranstehenden Ansprüche, **dadurch gekennzeichnet, dass** die funktionale Portkennung, die für die Aktualisierung verwendet wird, zufällig ausgewählt wird.

4. Rasches Neukonfigurations-Verfahren gemäß einem der Ansprüche 1 bis 3, **dadurch gekennzeichnet, dass** die funktionale Portkennung, die für die Aktualisierung verwendet wird, in Abhängigkeit von einem Zähler ausgewählt wird, der einer Anzahl von ausgeführten Aktualisierungen entspricht.

5. Rasches Neukonfigurations-Verfahren gemäß einem der Ansprüche 1 bis 3, **dadurch gekennzeichnet, dass** die funktionale Portkennung, die für die Aktualisierung verwendet wird, in Abhängigkeit von einem Rang ausgewählt wird, der aus einer Liste von Portkennungen vorbestimmt wird.

6. Rasches Neukonfigurations-Verfahren gemäß einem der voranstehenden Ansprüche, **dadurch gekennzeichnet, dass** eine Portliste, die zum Auswählen der funktionalen Portkennung verwendet wird, sortiert wird.

7. Rasches Neukonfigurations-Verfahren gemäß Anspruch 6, **dadurch gekennzeichnet, dass** das Sortierkriterium die Last der Ports ist.

8. Digitale Speichervorrichtung, umfassend eine Datei, die Anweisungscodes entspricht, die das Verfahren gemäß einem der voranstehenden Ansprüche umsetzen, wenn diese Anweisungscodes ausgeführt werden.

9. Vorrichtung, umfassend die Mittel, die zum Umsetzen des Verfahrens gemäß einem der Ansprüche 1 bis 7 ausgestaltet sind.

## Claims

1. Method for quick reconfiguration of routing in the event of a fault in a port of a switch (100) comprising a plurality of ports (150, 150.i, 150.1, 150.N), a persistent memory (130) comprising at least one routing table zone (130.1) comprising a plurality of routing recordings for maintaining data corresponding to a routing table (130.1), and a working memory (120) comprising several zones of which at least a routing table zone (120.1), it is a copy of the routing table of the persistent memory, for working on data corresponding to a routing table (120.1), **characterised in that** it comprises the following steps:
- Transmitting (1010) a first message to indicate a fault which comprises at least one identifier of the switch and one identifier of the faulty port of the switch,
- Independently updating (1020) the routing data only in the working memory by replacing an identifier of the port with the fault (150.i) with an identifier of an operational port, the identifier of the operational port being selected locally,
- Transmitting (1030) a second message to indicate that the table was updated, comprising a payload of this second message comprises at least one switch identifier and one description of the modifications made to the routing data in the working memory,
- Receiving (1040) a routing table updating message,
- Using (1050) data of the routing table updating message in order to update the working memory and the persistent memory, with these updates being compliant with the data of the updating message.

2. Method for quick reconfiguration according to claim 1, **characterised in that** the identifier of the operational port used for the updating is selected from a set formed by identifiers of operational ports of the plurality of ports.

3. Method for quick reconfiguration according to one of the preceding claims, **characterised in that** the identifier of the operational port used for the updating is selected randomly.

4. Method for quick reconfiguration according to one of claims 1 to 3, **characterised in that** the identifier of the operational port used for the updating is selected according to a counter corresponding to a number of updates carried out.

5. Method for quick reconfiguration according to one of claims 1 to 3, **characterised in that** the identifier of the operational port used for the updating is selected according to a predetermined ranking in a list of port identifiers.

6. Method for quick reconfiguration according to one of the preceding claims, **characterised in that** a list of ports used for selecting the identifier of the operational port is sorted.

7. Method for quick reconfiguration according to claim 6, **characterised in that** the sort criterion is the load of the ports.

8. Digital storage device comprising a file corresponding to instructions codes implementing the method according to one of the preceding claims.

9. Device implementing the method according to one of claims 1 to 7.
